Europäisches Patentamt

European Patent Office

Office européen des brevets

(11) Publication number : **0 468 743 A1**

# (12) EUROPEAN PATENT APPLICATION

(21) Application number : **91306695.7**

(22) Date of filing : **23.07.91**

(51) Int. Cl.⁵ : **D04H 1/00**

(30) Priority : **24.07.90 ZA 905817**

(43) Date of publication of application :
**29.01.92 Bulletin 92/05**

(84) Designated Contracting States :
**AT BE CH DE DK ES FR GB GR IT LI LU NL SE**

(71) Applicant : **UNIVERSAL FILTRATION
(PROPRIETARY) LIMITED
Michigan Street, Airport Industria
Cape Town, Cape Province (ZA)**

(72) Inventor : **Minnaar, Ivor Mundell
Plot 52, Leeuwenskloof
Broederstroom, Transvaal Province (ZA)**

(74) Representative : **Pendlebury, Anthony et al
PAGE, WHITE & FARRER 54 Doughty Street
London WC1N 2LS (GB)**

(54) Manufacture of filter elements.

(57) A method of fabricating a filter element includes providing a lofted batt (10) of a fibrous material ; and compressing and, simultaneously, deforming the batt (10), in a single operation to form a plurality of alternating ribs and valleys in the batt (10) to provide a one-piece article which constitutes the filter element. In a preferred form of the invention the method includes forming the ribs and valleys in a concentric annular pattern in the batt (10).

FIG 3

EP 0 468 743 A1

THIS INVENTION relates to a filter element. More particularly, the invention relates to a method of fabricating a filter element and to a filter element fabricated in accordance with the method.

According to the invention, there is provided a method of fabricating a filter element which includes

providing a lofted batt of a fibrous material; and

compressing and, simultaneously, deforming the batt in a single operation to form a plurality of alternating ribs and valleys in the batt to provide a one-piece article which constitutes the filter element.

In a preferred form of the invention the method may include forming the ribs and valleys in a concentric annular pattern in the batt.

Thus, the method may include forming the ribs and valleys by placing the batt on a former having raised concentric rings of increasing diameter and urging a deforming member having complementary rings towards the former such that the rings of the former and the deforming member mesh.

The batt may comprise at least two layers of a fibrous material, one of the layers including thermosetting fibres and the method may include heating an operatively outer surface of the said one of the layers during the compression and deformation to fuse the fibres. The heating of the said layer may be effected by heating the former. The length of time for which the batt is heated will be dependent upon the required pore size which is dependent on the function of the filter element. It will be appreciated that, the longer the batt is heated, the smaller the pore sizes will be. This is also dependent upon the temperature to which the former is heated.

Further, heating of the batt and fusing the fibres imparts structural integrity to the batt to ensure that it retains its deformed shape.

The other surface of the batt may either be heated, or it may be cooled, or it may be retained at ambient temperature.

The method may include stretching the batt over the rings of the former by means of the deforming member to effect pre-heating of the fibres prior to fusing the fibres. The stretching of the batt over the rings of the former may also take place prior to deforming the batt.

In one embodiment of the invention, the lofted batt may, prior to compression and deformation thereof, be cut from a feedstock of material to the approximate required shape whereafter it is inserted between the former and the deforming member to be compressed and deformed.

In another embodiment of the invention, a feedstock of the lofted batt may be fed between the former and the deforming member to be compressed, deformed and, thereafter, cut to the required shape. In this embodiment of the invention, the cutting of the batt may be effected by suitably shaped knife-edge formations on the deforming member, the former then serving as an anvil-like arrangement.

After heating the filter element for a predetermined period of time, the method may include removing the filter element from the former and attaching a support arrangement to the filter element to provide a filter assembly. The method may include forming the support arrangement about the filter element by moulding. Preferably, the support arrangement is formed by injection moulding.

The invention extends also to a filter element when made in accordance with the method as described above.

The invention is now described by way of examples with reference to the accompanying diagrammatic drawings.

In the drawings,

Figure 1 shows a sectional side view of a lofted batt of material used in the method of fabricating a filter element, in accordance with the invention;

Figures 2 to 4 show, schematically, a method of fabricating the filter element in accordance with a first embodiment of the invention;

Figures 5 to 7 show, schematically, a method of fabricating the filter element in accordance with a second embodiment of the invention;

Figure 8 shows a plan view of a filter assembly incorporating a filter element made in accordance with the method of the invention; and

Figure 9 shows a sectional side view of the filter assembly.

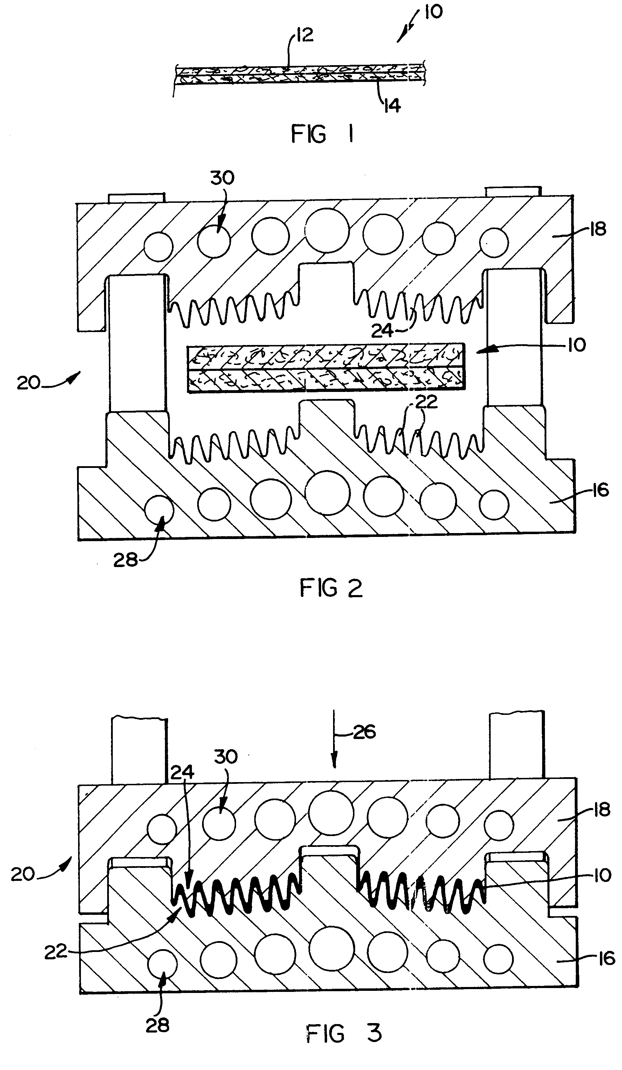

Referring initially to Figure 1 of the drawings, a lofted batt of material used in a method, in accordance with the invention, of fabricating a filter element is designated generally by the reference numeral 10 .

As illustrated, the lofted batt 10 comprises a first layer 12 and a second layer 14 which are attached together in a suitable manner, for example, by intertwining of the fibres of the layers 12 and 14. The layers 12 and 14 have fibres of a synthetic plastics material such as, for example, polypropylene, polyethylene, a polyester, mixtures of the two, or the like. The layer 14, however, also incorporates thermosetting fibres, the purpose of which will be described in greater detail below.

Referring now to Figures 2 to 4 of the drawings, a method of fabricating the filter element, in accordance with a first embodiment of the invention is illustrated. The lofted batt 10 is cut to the approximate required shape, for example, a disc shape. The lofted batt 10 is placed in position between a former 16 and a deforming member 18. The former 16 forms the first part of a mould 20 with the deforming member 18 forming a second part of the mould 20.

The former 16 has a plurality of concentric rings 22 formed on a surface thereof, the rings 22 being of increasing diameter. The deforming member 18 has complementary rings 24 formed on that surface thereof facing the former 16.

As illustrated, the deforming member 18 is displaceably arranged relative to the former 16. Thus, in use, the deforming member 18 is raised with respect to the former 16 and the lofted batt 10 is placed in position between the rings 22 and 24 with the layer 14 of the lofted batt facing towards the former 16.

The deforming member 18 is moved towards the former 16 in the direction of arrow 26 (Figure 3) such that the ribs 22 and 24 mesh.

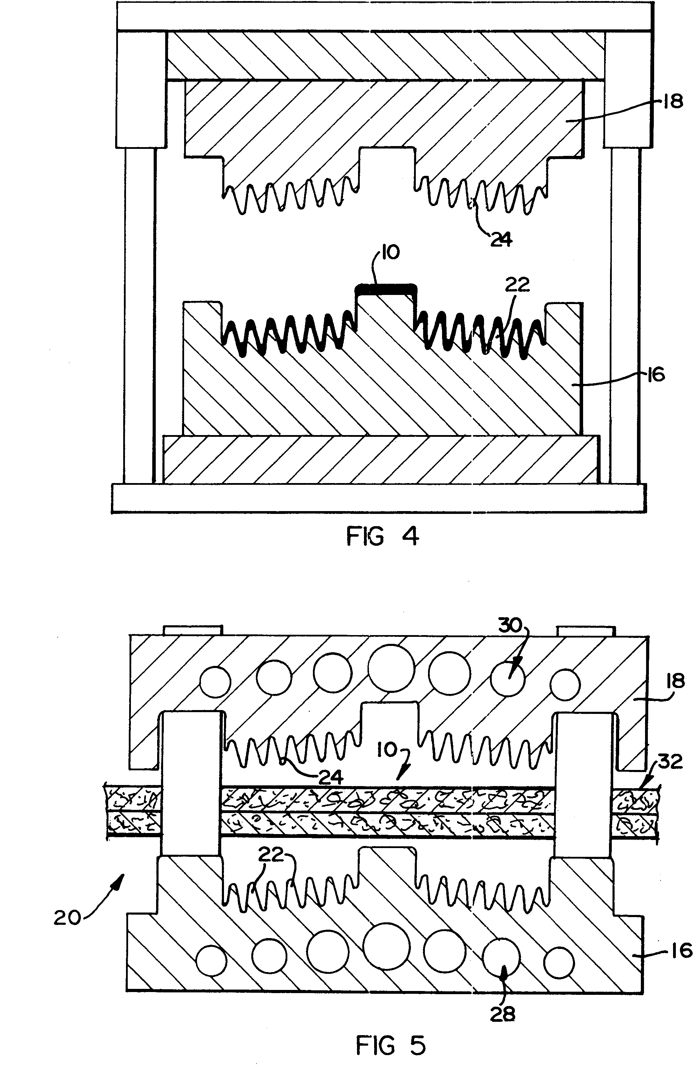

As the ribs 24 are brought into meshing engagement with the ribs 22, the lofted batt 10 is compressed and deformed so that annular alternating ribs and valleys are imparted to the batt 10 as illustrated in Figure 3 and 4 of the drawings.

The former 16 carries a heating element illustrated schematically at 28. The heating element 28 causes the former 16 to be heated and, when the lofted batt 10 is in contact with the heated surface of the former 16, the thermosetting fibres in the layer 14 of the batt 10 are fused to form the required pore size for the filter element.

As an example, the former 16 is heated to a temperature of approximately 125°C and the lofted batt 10 is retained in its compressed position between the former 16 and the deforming member 18 for approximately 40 seconds. It will be appreciated that the longer the lofted batt is subjected to the heat, the smaller will be the size of the pores. The deforming member 18 may, if desired, carry a cooling element therein as illustrated schematically by the reference numeral 30 in Figures 2 and 3 of the drawings.

After the predetermined period of time, the deforming member 18 is raised clear of the former 16, as shown in Figure 4 of the drawings, and the compressed and deformed batt 10 is removed from the former 16. It will be appreciated that the heating of the layer 14 of the batt 10 also imparts structural integrity to the batt 10 to ensure that it retains its deformed shape after removal from the former 16.

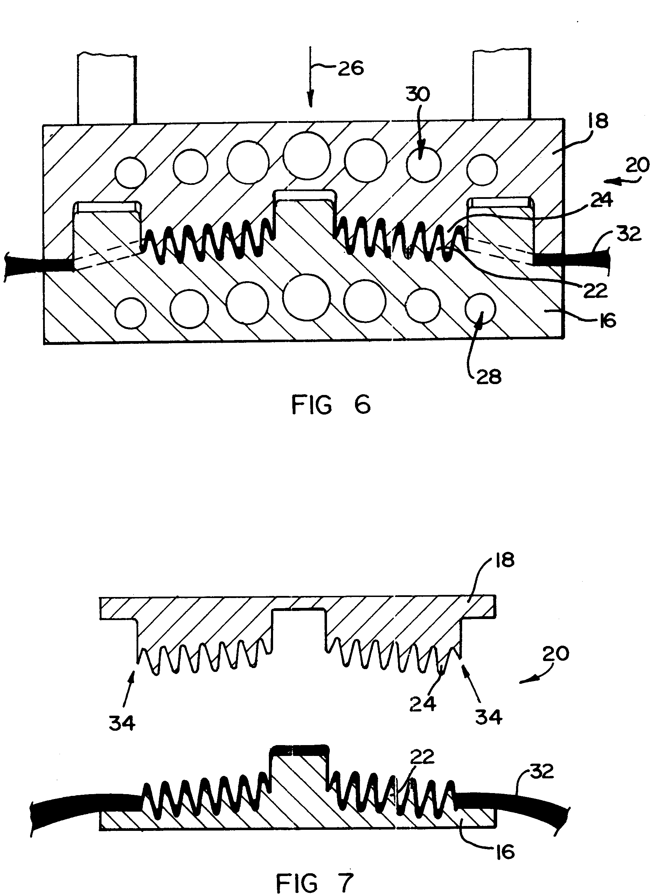

Referring now to Figures 5 to 7 of the drawings, a method of fabricating a filter element in accordance with a second embodiment of the invention is illustrated. With reference to Figures 2 to 4 of the drawings, like reference numerals refer to like parts, unless otherwise specified.

In this embodiment of the invention, instead of initially cutting the lofted batt 10 into the required shape prior to insertion into the mould 20, a feedstock 32 of the lofted batt 10 of fibrous material is placed in position between the former and the deforming member 18. The deforming member 18 is moved towards the former 16 so that the ribs 21 and 24 mesh. Once again, the former 16 is heated to fuse the fibres of the layer 14 whilst the deforming member 18 is either cooled, heated or maintained at the ambient temperature.

After the batt 10 has been compressed and deformed, it is cut to the required shape. The cutting of the batt 10 is effected by suitably shaped knife-edge formations 34 carried at the edges of the deforming member 18. The former 16 serves as an anvil for the knife-edges 34 of the deforming member 18.

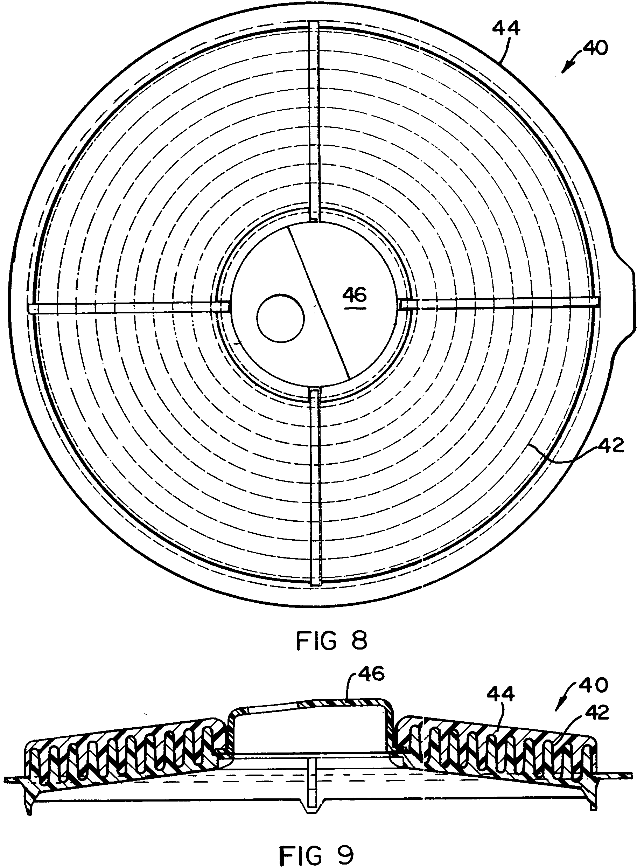

Referring finally to Figures 8 and 9 of the drawings, a filter assembly is illustrated and is designated generally by the reference numeral 40. The filter assembly 40 comprises a filter element 41 made in accordance with the method as described above with reference to Figures 2 to 7 of the drawings.

The filter element 42 so formed is removed from the mould 20. A central portion of the filter element 42 is cut away and a periphery of the filter element 42 is finished to provide a smooth edge. A support arrangement in the form of a support frame 44 is injection moulded about the filter element to form the filter assembly 40. A central boss 46 is mounted in position in the frame 44.

Hence, it is an advantage of the invention, that a method of manufacturing a filter element is provided which reduces the number of stages to form the filter element and the associated filter assembly. Also, in comparison with other filters constituting a number of filter elements, the structural integrity of the filter made in accordance with the method of the invention is improved.

## Claims

1. A method of fabricating a filter element 42 characterised by

   providing a lofted batt 10 of a fibrous material; and

   compressing and, simultaneously, deforming the batt 10 in a single operation to form a plurality of alternating ribs and valleys in the batt 10 to provide a one-piece article which constitutes the filter element 42.

2. The method as claimed in Claim 1 characterised by forming the ribs and valleys in a concentric annular pattern in the batt 10.

3. The method as claimed in Claim 2 characterised by forming the ribs and valleys by placing the batt 10 on a former 16 having raised concentric rings 22 of increasing diameter and urging a deforming member 18 having complementary rings 24 towards the former 16 such that the rings 22, 24 of the former 16 and the deforming member 18 mesh.

4. The method as claimed in Claim 3 characterised in that the batt 10 comprises at least two layers 12, 14 of a fibrous material, one of the layers 14 including thermosetting fibres and characterised further by heating an operatively outer surface of the said one of the layers 14 during the compression and deformation to fuse the fibres.

5. The method as claimed in Claim 4 characterised in that heating of the said layer 14 is effected by heating the former 16.

6. The method as claimed in Claim 5 characterised by stretching the batt 10 over the rings 22 of the former 16 by means of the deforming member 18 to effect pre-heating of the fibres prior to fusing the fibres.

7. The method as claimed in any one of Claims 4 to 6 inclusive characterised by, after heating the filter element 42 for a predetermined period of time, removing the filter element 42 from the former 16 and attaching a support arrangement 44 to the filter element 42 to provide a filter assembly 40.

8. The method as claimed in Claim 7 characterised by forming the support arrangement 44 about the filter element 42 by moulding.

9. A filter element 42 fabricated in accordance with the method as claimed in any one of Claims 1 to 8 inclusive.

FIG 1

FIG 2

FIG 3

FIG 4

FIG 5

6

FIG 6

FIG 7

FIG 8

FIG 9

## EUROPEAN SEARCH REPORT

**European Patent Office**

Application Number

EP    91 30 6695

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | WO-A-8 607 563 (TRAVENOL EUROPEAN RESEARCH) 31 December 1986 <br> * the whole document * <br> --- | 1-4 | D04H1/00 |
| Y | DE-A-3 229 093 (RIENSCH & HELD) <br> * the whole document * | 1-4 | |
| A | | 6-8 | |
| | --- | | |
| A | US-A-4 080 416 (JACK E. HOWARD) <br> * claims 1-3; figure 12 * <br> --- | 4 | |
| A | EP-A-0 121 299 (MINNESOTA) <br> * claims 1-4; figures 1-2 * <br> ----- | 1,7-9 | |
| | | | TECHNICAL FIELDS SEARCHED (Int. Cl.5) |
| | | | D04H <br> B29C |

The present search report has been drawn up for all claims

| Place of search | Date of completion of the search | Examiner |
|---|---|---|
| THE HAGUE | 10 OCTOBER 1991 | DURAND F.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                     

& : member of the same patent family, corresponding document

EPO FORM 1503 03.82 (P0401)